# EUROPÄISCHE PATENTANMELDUNG

(11) **EP 0 671 475 A1**
(43) Veröffentlichungstag der Anmeldung: **13.09.1995**
(21) Anmeldenummer: 95200397.8
(22) Anmeldetag: 20.02.1995
(51) Int. Cl.: C21C 5/56, C21C 5/52

(54) **Verfahren und Vorrichtung zur Herstellung von Stahlschmelzen aus Schrott**

(30) Priorität: 09.03.1994 DE 4407769
(71) Anmelder: MANNESMANN Aktiengesellschaft, D-40213 Düsseldorf (DE)
(72) Erfinder: Rollinger, Bernt, D-65232 Taunusstein (DE); Wells, William, Exeter, Devon EX5 2JL (GB)

(57) **Zusammenfassung**

Es wird ein Verfahren zur Herstellung von Stahlschmelzen aus Schrott beschrieben, bei dem in ein Schmelzgefäß eine erste Schrottfüllung eingebracht und danach auf das Schmelzgefäß ein Schrottbehälter aufgesetzt wird, der eine zweite Schrottfüllung enthält. Auf den Schrottbehälter wird eine mit einer Abgasleitung versehene Haube aufgesetzt. In die im Schmelzgefäß befindliche Schrottfüllung werden durch Brenner Sauerstoff und gasförmige Kohlenwasserstoffe eingeblasen. Durch Mehrmanteldüsen werden Sauerstoff sowie feinkörnige Kohle und/oder gasförmige Kohlenwasserstoffe in die Schmelze eingeblasen, und die im Schmelzgefäß befindliche Schrottfüllung wird eingeschmolzen. Gleichzeitig wird durch oberhalb der Mehrmanteldüsen angeordnete Blaslanzen in die im Schmelzgefäß befindliche Schrottfüllung Luft eingeblasen, die eine Temperatur von 500 bis 600°C hat. Die im Schrottbehälter befindliche Schrottfüllung wird auf eine Temperatur von 800 bis 900°C vorgewärmt und gelangt entsprechend dem Schmelzfortschritt in das Schmelzgefäß. Das Abgas des Schmelzprozesses wird abgeführt, verbrannt und die Verbrennungswärme wird ganz oder teilweise zum Aufheizen der über die Blaslanzen in das Schmelzgefäß eingeblasenen Luft verwendet. Nach Beendigung des Einschmelzens der ersten Schrottfüllung werden die Haube sowie der Schrottbehälter vom Schmelzgefäß entfernt und durch einen mit mindestens einer Elektrode versehenen Deckel ersetzt. Die Schmelze wird danach mittels elektrischer Energie geheizt, durch Einblasen von Sauerstoff und gasförmigen Kohlenwasserstoffen vom FeO befreit und gefrischt sowie schließlich abgestochen.

## Beschreibung

Die Erfindung bezieht sich auf ein Verfahren zur Herstellung von Stahlschmelzen aus Schrott sowie auf eine Vorrichtung zur Durchführung des Verfahrens.

Es ist bekannt, daß aus Eisen- und Stahlschrott durch Schmelzen und gleichzeitiges oder nachfolgendes Frischen Stahlschmelzen erzeugt werden können. Die Wirtschaftlichkeit eines solchen Verfahrens ist insbesondere davon abhängig, daß die Schmelzwärme mit optimalem Wirkungsgrad auf den zu erschmelzenden Schrott bzw. das zum Erschmelzen des Schrotts verwendete Metallbad übertragen wird. Die Übertragung der Schmelzwärme auf ein Metallbad erfolgt in bekannter Weise dadurch, daß elektrische Energie in das Metallbad eingebracht oder daß im Metallbad Kohlenstoff mit Sauerstoff verbrannt wird. Das Frischen der kohlenstoffhaltigen Schmelze bis zu einem Kohlenstoffgehalt von < 0,4 Gew.-% erfolgt durch das Einblasen oder durch das Aufblasen von Sauerstoff oder mit Sauerstoff angereicherter Luft in bzw. auf die Schmelze. Das Frischen kann entweder nach dem Schmelzvorgang oder während des Schmelzvorgangs durchgeführt werden.

Aus der DE-OS 37 35 150 ist ein Verfahren zum Zuführen von Wärmeenergie in eine Metallschmelze bekannt, bei dem in ein die Metallschmelze aufnehmendes Schmelzgefäß fester Kohlenstoff und einzuschmelzende feste metallische Werkstoffe, vorzugsweise Stahlschrott, eingebracht und durch Unterbaddüsen in eine im Schmelzgefäß verbliebene Restschmelze oder in eine in das Schmelzgefäß chargierte Metallschmelze Sauerstoff eingeblasen wird. Bei diesem bekannten Verfahren ist vorgesehen, daß Kohlenstoff in Form von mit Blech ummantelten Kohlebriketts chargiert wird.

Die DE-OS 30 45 966 offenbart ein Verfahren zum Frischen von Metallschmelzen, insbesondere von flüssigem Roheisen, in einem Siemens-Martin-Ofen, in einem Lichtbogenofen oder einem Konverter mittels eines unterhalb der Badoberfläche eingeleiteten sauerstoffhaltigen Gases. Die Einleitung des sauerstoffhaltigen Gases erfolgt durch Düsen, die aus mehreren konzentrischen Rohren bestehen, wobei durch das zentrale Rohr ein sauerstoffhaltiges Gas sowie durch das erste konzentrische Rohr ein Schutzfluid geführt wird und wobei als Schutzfluid gasförmige oder flüssige Kohlenwasserstoffe oder Wasser oder organische Hydroxylverbindungen verwendet werden.

Aus der JP-OS 62-174315 ist ein Verfahren zur Herstellung von Stahl bekannt, bei dem in ein Schmelzgefäß, das eine Impfschmelze enthält, kohlenstoffhaltige Materialien und Sauerstoff eingeblasen werden, wodurch der Kohlenstoff verbrannt wird. Anschließend wird das Schmelzgefäß mit Schrott beschickt. Mit der durch das Verbrennen des Kohlenstoffs erhaltenen Wärme wird der Schrott erwärmt und geschmolzen, wodurch die Menge der Schmelze vergrößert wird. Ein Teil der im Schmelzgefäß entstehenden Schmelze wird als Impfschmelze zurückbehalten. Der Rest wird in eine Frischpfanne überführt. In der Frischpfanne wird die Schmelze durch Elektroden aufgeheizt und gefrischt. Nach dem Ende des Frischens wird die Stahlschmelze zum Gießen abgestochen.

Schließlich ist aus der DE-OS 42 15 858 ein Verfahren zur Herstellung von Stahlschmelzen aus festen Eisenträgern bekannt, bei dem die vorgewärmten festen Eisenträger sowie vorgewärmte feste stückige Kohlenstoffträger in ein Schmelzgefäß chargiert und mit der durch einen Lichtbogen erzeugten Wärme unter Bildung einer Schmelze, die einen Kohlenstoffgehalt von 0,3 bis 2,0 Gew.-% hat, eingeschmolzen werden, bei dem anschließend in die kohlenstoffhaltige Schmelze vorgewärmte feste Eisenträger sowie vorgewärmte feste stückige Kohlenstoffträger chargiert und mit der bei der Reaktion von Sauerstoff und Kohlenstoff gebildeten Wärme eingeschmolzen werden, wobei der Sauerstoff sowie weitere feste feinteilige Brennstoffe durch unterhalb der Schmelzbadoberfläche im Schmelzgefäß angeordnete Düsen in die Schmelze eingebracht werden und wobei das Frischen der Schmelze bis zu einem Kohlenstoffgehalt < 0,4 Gew.-% erfolgt, bei dem während der Zufuhr von Sauerstoff und Kohlenstoff in die Schmelze ein sauerstoffhaltiges Gas oberhalb der Schmelzbadoberfläche in das Schmelzgefäß eingebracht wird, bei dem das im Schmelzgefäß gebildete Abgas zur Vorwärmung der festen Eisenträger verwendet wird und bei dem die Stahlschmelze nach dem Frischen aus dem Schmelzgefäß schlackenfrei entnommen wird.

Obwohl die Fachwelt immer wieder versucht hat, möglichst viel Schmelzwärme durch Verbrennung von fossilen Brennstoffen zu erzeugen und die dem Schmelzgefäß zugeführte Schmelzwärme mit hohem Wirkungsgrad auszunutzen, hat sich dennoch gezeigt, daß die bekannten Verfahren die dem Schmelzgefäß zugeführte Schmelzwärme nicht mit optimalem Wirkungsgrad ausnutzen und daher insbesondere das Einschmelzen sehr großer Schrottmengen in einer bestimmten Zeit Schwierigkeiten bereitet. Der Erfindung liegt daher die Aufgabe zugrunde, ein Verfahren zur Herstellung von Stahlschmelzen aus Schrott zu schaffen, das insbesondere die Ausnutzung der Schmelzwärme erhöht und darüber hinaus eine umweltschonende Arbeitsweise gestattet. Der Erfindung liegt ferner die Aufgabe zugrunde, eine Vorrichtung zur Durchführung des Verfahrens zu schaffen.

Die der Erfindung zugrundeliegende Aufgabe wird zum einen durch die Schaffung eines Verfahrens zur Herstellung von Stahlschmelzen aus Schrott gelöst, bei dem
a) in ein Schmelzgefäß, in dem sich ein aus der flüssigen Stahlschmelze bestehender Sumpf befindet, Schrott eingebracht wird, auf das Schmelzgefäß ein Schrottbehälter aufgesetzt wird, der mit Schrott gefüllt ist oder wird und auf den Schrottbehälter eine mit einer Abgasleitung versehene Haube aufgesetzt wird,
b) danach in die im Schmelzgefäß befindliche Schrottfüllung durch mindestens einen Brenner Sauerstoff und gasförmige Kohlenwasserstoffe sowie in die im Schmelzgefäß befindliche Schmelze durch mindestens eine unterhalb der Brenner angeordnete Mehrmanteldüse Sauerstoff sowie feinkörnige Kohle und/oder gasförmige Kohlenwasserstoffe eingeblasen und die im Schmelzgefäß befindliche Schrottfüllung eingeschmolzen wird,
c) wobei gleichzeitig durch oberhalb der Brenner angeordnete Blaslanzen in die im Schmelzgefäß befindliche Schrottfüllung Luft eingeblasen wird, die eine Temperatur von 500 bis 600°C hat und durch die ein großer Teil des vorhandenen CO verbrennt, wodurch die im Schrottbehälter befindliche Schrottfüllung auf eine Temperatur von 800 bis 900°C vorgewärmt wird, die ihrerseits entsprechend dem Schmelzfortschritt in das Schmelzgefäß gelangt,
d) das mit der vorgewärmten Luft sowie dem Verbrennungsabgas vermischte Abgas des Schmelzprozesses über die Abgasleitung abgeführt, noch vorhandenes CO verbrannt und der Wärmeinhalt der Gasmischung ganz oder teilweise zum Aufheizen der über die Blaslanzen in das Schmelzgefäß eingeblasenen Luft verwendet wird,
e) nach Beendigung des Einschmelzens der ersten Schrottfüllung die Haube sowie der Schrottbehälter vom Schmelzgefäß entfernt und durch einen mit mindestens einer Elektrode und einer Abgasleitung versehenen Deckel ersetzt werden,
f) danach in die Schmelze zur Reduktion des FeO durch die Mehrmanteldüsen Sauerstoff und gasförmige Kohlenwasserstoffe eingeblasen sowie gleichzeitig über die Elektroden Energie in die jetzt im Schmelzgefäß befindliche zweite Schrottfüllung und in die Schmelze eingebracht wird,
g) die Schmelze anschließend durch Einblasen von Sauerstoff über die Mehrmanteldüsen bei gleichzeitiger Einbringung von Energie über die Elektroden bis zu einem Kohlenstoffgehalt < 0,4 % gefrischt und danach aus dem Schmelzgefäß schlackenfrei entnommen wird, wobei 10 bis 15 Gew.-% der Schmelze als Sumpf im Schmelzgefäß zurückbleiben.

Mit dem erfindungsgemäßen Verfahren wird in vorteilhafter Weise eine optimale Schrottvorwärmung erreicht, denn der vorgewärmte Schrott befindet sich in unmittelbarer Nähe zur Schmelze, und die oberhalb der Schmelze in das Schmelzgefäß eingebrachte vorgewärmte Luft verbrennt das CO und verteilt die heißen Abgase des Schmelz- und des Verbrennungsprozesses gleichmäßig im Schrott, so daß eine außerordentlich gleichmäßige Vorwärmung des Schrotts eintritt. Außerdem wird ein sehr großer Teil der Schmelzwärme durch die Verbrennung von kohlenstoffhaltigen Brennstoffen erzeugt, so daß der Anteil der elektrischen Energie am gesamten Energiebedarf des Verfahrens relativ gering gehalten werden kann. Die Mehrmanteldüsen münden unterhalb der Schmelzbadoberfläche in der Schmelze.

In weiterer Ausgestaltung der Erfindung ist vorgesehen, daß der Schrott, der gemäß der Verfahrensstufe a) in das Schmelzgefäß eingebracht wird, feste stückige Kohlenstoffträger enthält. Als besonders vorteilhaft hat es sich erwiesen, wenn als feste stückige Kohlenstoffträger mit Stahlblech ummantelte Kohlebriketts verwendet werden. Die Kohlebriketts bestehen aus feinteiliger Kohle, wobei der Teilchendurchmesser der Kohle bis 12 mm betragen kann. Der Kohlenstoffgehalt der festen Kohlenstoffträger wird im Schmelzgefäß durch Oxidation nahezu quantitativ zu CO und damit in Schmelzwärme umgewandelt, wobei das für die Ummantelung der Kohlebriketts verwendete Stahlblech die Zusammensetzung der Stahlschmelze nicht nachteilig beeinflußt. Um die Gase austreten zu lassen, die bei der Erwärmung der Kohlebriketts entstehen, ist das zur Ummantelung der Kohlebriketts verwendete Stahlblech nicht vollständig gasdicht ausgeführt; beispielsweise ist es mit Löchern versehen.

Nach der Erfindung ist ferner vorgesehen, daß die gemäß Verfahrensstufe b) verwendeten gasförmigen Kohlenwasserstoffe aus CH₄ und/oder C₂H₆ und/oder C₃H₈ bestehen. Durch das Einblasen der genannten gasförmigen Kohlenwasserstoffe oder deren Mischungen (z.B. Erdgas) in die im Schmelzgefäß befindliche Schrottfüllung wird die Flamme gezündet und sehr viel Schmelzwärme erzeugt, so daß der Schmelzfortschritt beachtlich ist, die Mehrmanteldüsen sehr schnell in die Metallschmelze eintauchen und betriebsbereit sind. Gleichzeitig wird durch das aufsteigende CO und H₂ das in der Schlacke vorhandene FeO zum Teil reduziert.

Nach der Erfindung ist ferner vorgesehen, daß die gemäß Verfahrensstufe b) verwendete feinkörnige Kohle einen mittleren Teilchendurchmesser d₅₀ von 0,01 bis 1,5 mm hat. Durch das Einblasen feinteiliger Kohle, die vorzugsweise aschearm ist, wird die innerhalb der Schmelze vorhandene Kohlenstoffmenge sehr groß, so daß auch eine große Menge an Schrott ohne eine nachteilige Eisenoxidation eingeschmolzen werden kann.

Nach der Erfindung ist es besonders vorteilhaft, wenn gemäß Verfahrensstufe c) 75 bis 125 Nm³ vorgewärmte Luft pro Tonne abgestochener Schmelze eingesetzt werden. Diese Luftmenge garantiert eine gleichmäßige Vorwärmung des oberhalb der Schmelze befindlichen Schrotts und eine vollständige Verbrennung des Abgases des Schmelzprozesses.

Nach der Erfindung ist es vorteilhaft, wenn die Schmelze in den Verfahrensstufen b), f) und g) eine Temperatur von 1500 bis 1660°C hat, denn bei dieser Temperatur hat die Ausmauerung des Schmelzgefäßes eine optimale Lebensdauer, und es kommt nicht zu unerwünschten Anbackungen.

In zweckmäßiger Ausgestaltung der Erfindung ist vorgesehen, daß das in den Verfahrensstufen f) und g) anfallende Abgas über die Abgasleitung des Deckels abgeführt und vollständig verbrannt wird. Die durch Verbrennung des während der Restreduktion und des Frischens anfallenden Abgases gewonnene Wärme kann zur Erzeugung von Dampf verwendet werden.

Ferner ist in weiterer Ausgestaltung der Erfindung vorgesehen, daß die in der Verfahrensstufe f) verwendeten gasförmigen Kohlenwasserstoffe aus C₂H₆ und/oder C₃H₈ und/oder C₄H₁₀ bestehen. Es hat sich gezeigt, daß diese Kohlenwasserstoffe oder Gemische aus den Kohlenwasserstoffen die Restreduktion des noch vorhandenen FeO bewirken können, wenn sie durch die Mehrmanteldüsen in die Schmelze eingeblasen werden.

Zum anderen wird die der Erfindung zugrundeliegende Aufgabe durch die Schaffung einer Vorrichtung zur Durchführung des Verfahrens zur Herstellung von Stahlschmelzen aus Schrott gelöst, die aus einem Schmelzgefäß, einem Schrottbehälter, einer Haube, einem Deckel, einer Schwenkeinrichtung, einer Gasbrennkammer und einem Luftvorwärmer besteht, wobei das Schmelzgefäß eine Ausmauerung, einen Abstich, mindestens eine wassergekühlte Mehrmanteldüse, mindestens einen Brenner sowie mindestens eine Blaslanze aufweist, wobei die Wände des Schrottbehälters mit Wasser gekühlt sind, wobei die Haube mit einer Abgasleitung versehen ist, wobei der Deckel mindestens eine Elektrode sowie eine Abgasleitung hat und wobei die Schwenkeinrichtung den Schrottbehälter, die Haube und den Deckel schwenkend und/oder hebend bewegt. Selbstverständlich ist es möglich, mehrere erfindungsgemäße Vorrichtungen zu einer Stahlerzeugungsanlage zusammenzufassen.

Die verwendeten Mehrmanteldüsen bestehen aus drei konzentrischen Rohren, wobei durch das zentrale Rohr die feinteilige Kohle oder die gasförmigen Kohlenwasserstoffe und durch das mittlere Rohr der Sauerstoff transportiert werden. Durch das äußere Rohr wird ein Kühlmittel geführt, das vorzugsweise aus Wasserdampf besteht.

In weiterer Ausgestaltung der Erfindung ist vorgesehen, daß der Schrottbehälter entweder einbautenfrei oder mit mindestens zwei klappbaren Halteeinrichtungen ausgestattet ist. Der Schrottbehälter besteht aus einer wassergekühlten Wand, die auf das Schmelzgefäß aufgesetzt wird. Der einbautenfreie Schrottbehälter stützt also die zweite Schrottfüllung seitlich ab, die auf der ersten im Schmelzgefäß befindlichen Schrottfüllung aufruht. Der einbautenfreie Schrottbehälter kann also immer erst mit Schrott gefüllt werden, nachdem er auf das Schmelzgefäß aufgesetzt wurde. Hingegen kann der mit mindestens zwei klappbaren Halteeinrichtungen ausgestattete Schrottbehälter auf dem Schrottplatz mit Schrott gefüllt und danach auf das Schmelzgefäß aufgesetzt werden. Durch Herunterklappen der Halteeinrichtungen gelangt der Schrott in das Schmelzgefäß.

Schließlich ist nach der Erfindung vorgesehen, daß der Schrottbehälter an dem Teil, das auf das Schmelzgefäß aufgesetzt ist, eine Schürze aufweist. Durch die Schürze wird in vorteilhafter Weise ermöglicht, daß der Schrottbehälter nur durch eine Schwenkbewegung vom Schmelzgefäß entfernt bzw. auf das Schmelzgefäß aufgesetzt werden kann. Es kommt hinzu, daß beim Auftreten zu hoher Temperaturen durch Anheben einzelner Schürzenteile Falschluft in den Schrottbehälter eingesaugt werden kann, die der Kühlung dient.

Der Gegenstand der Erfindung wird nachfolgend anhand der Zeichnung sowie eines Ausführungsbeispiels näher erläutert.

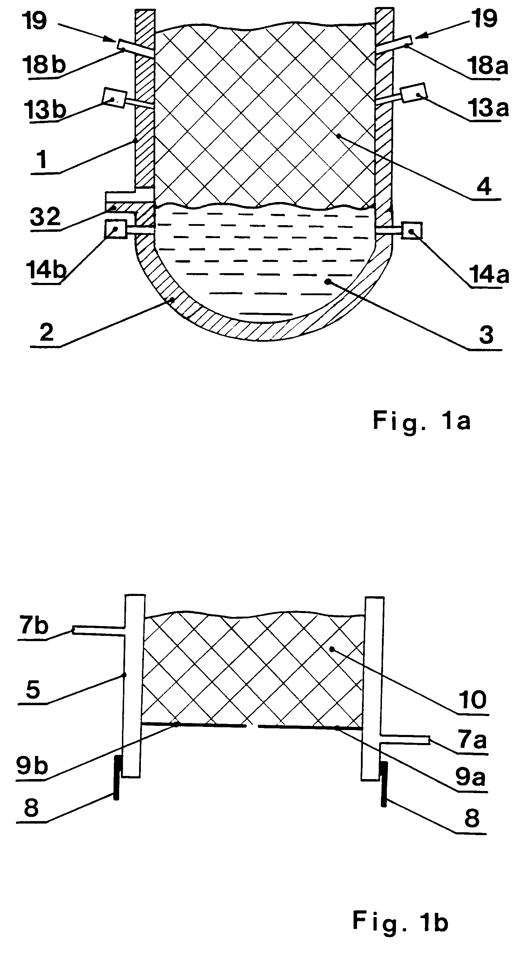

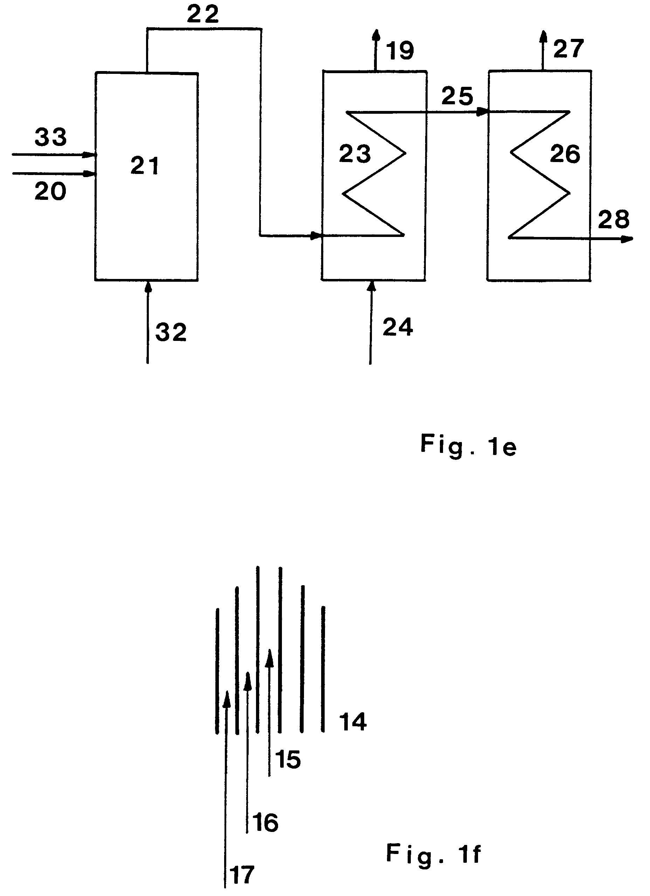

Die Figuren 1a bis 1f zeigen die einzelnen Prozeßapparate der erfindungsgemäßen Vorrichtung, die gemäß dem erfindungsgemäßen Verfahren wie folgt zusammenwirken:
Das Schmelzgefäß (1) ist mit einer Ausmauerung (2) versehen, die den mechanischen Beanspruchungen standhält, welche durch eine Beschickung des Schmelzgefäßes mit Schrott verursacht werden. Die Ausmauerung muß ferner gegen Roheisen- und Stahlschmelzen, die eine Temperatur von 1500 bis 1660°C aufweisen, resistent sein. Da die Schmelzen teilweise einen erhöhten FeO-Gehalt aufweisen, ist es erforderlich, daß die Ausmauerung bei 1500 bis 1660°C gegen FeO weitgehend resistent ist. Das Schmelzgefäß enthält einen Sumpf (3), der aus 10 bis 15 % des Gewichts der vorhergehenden Stahlschmelze besteht.

In der ersten Stufe des erfindungsgemäßen Verfahrens wird in das Schmelzgefäß (1) eine erste Füllung aus Schrott (4) chargiert. Die erste Schrottfüllung (4) enthält feste stückige Kohlenstoffträger und/oder mit Stahlblech ummantelte Kohlebriketts. Die Kohlebriketts bestehen aus feinteiliger Kohle, deren Teilchendurchmesser bis zu 12 mm beträgt. Das Stahlblech der Kohlebriketts ist nicht vollständig gasdicht, so daß die beim Erwärmen der Kohlebriketts entstehenden Gase austreten können.

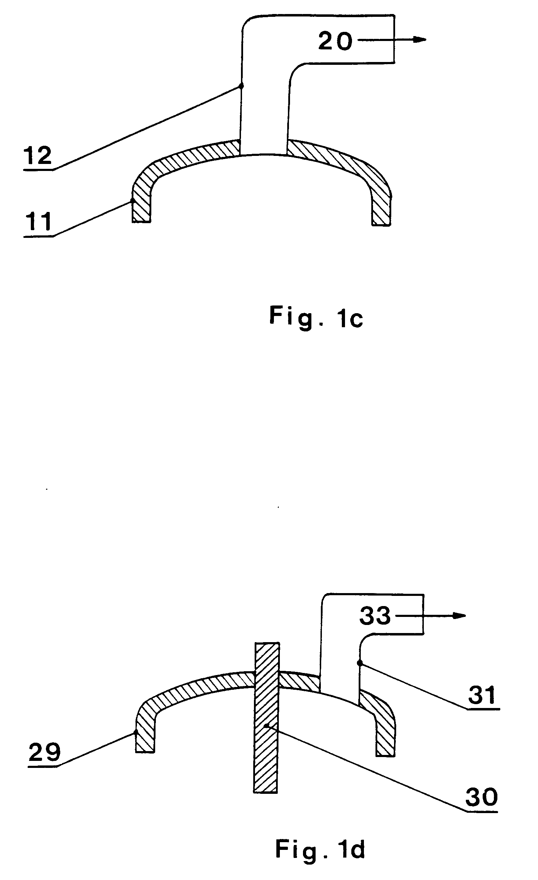

Nach dem Chargieren der ersten Schrottfüllung (4) wird auf das Schmelzgefäß (1) mittels einer in der Zeichnung nicht dargestellten Schwenkvorrichtung ein Schrottbehälter (5) aufgesetzt. Der Schrottbehälter (5) wird mit Wasser (7a, 7b) gekühlt und ist an dem Teil, der auf das Schmelzgefäß (1) aufgesetzt wird, mit einer Schürze (8) ausgerüstet. Wenn der Schrottbehälter (5) keine Einbauten aufweist, kann er nur dann mit Schrott gefüllt werden, wenn er sich auf dem Schmelzgefäß befindet, wobei die in den Schrottbehälter chargierte zweite Schrottfüllung auf der ersten Schrottfüllung (4) aufruht. Wenn der Schrottbehälter (5) - wie in Fig. 1b gezeigt - mindestens zwei klappbare Halteeinrichtungen (9a, 9b) besitzt, kann die Schrottfüllung (10) in den Schrottbehälter (5) chargiert werden, bevor er auf das Schmelzgefäß (1) aufgesetzt wird. Die Schrottfüllung (10) wird nach dem Aufsetzen des Schrottbehälters (5) dadurch in das Schmelzgefäß (1) chargiert, daß die Halteeinrichtungen (9a, 9b), die den Schrott im Schrottbehälter (5) fixieren, nach unten geklappt werden. Dadurch rutscht die zweite Schrottfüllung (10) zunächst teilweise in das Schmelzgefäß (1) und ruht auf der ersten Schrottfüllung (4) auf. Anschließend wird durch die in der Zeichnung nicht dargestellte Schwenkvorrichtung die in Fig. 1c dargestellte Haube (11) auf den Schrottbehälter (5) aufgesetzt. Die Haube (11) ist mit einer Abgasleitung (12) ausgerüstet.

Nach dem Aufsetzen der Haube (11) werden in einer zweiten Verfahrensstufe durch die Brenner (13a, 13b) gasförmige Kohlenwasserstoffe, vorzugsweise CH₄ oder Erdgas, sowie Sauerstoff in die Schrottfüllung (4) eingeblasen sowie gezündet. Gleichzeitig wird durch die Mehrmanteldüsen (14a, 14b) weiterer Brennstoff und weiterer Sauerstoff in die Schmelze eingeblasen. Die Mehrmanteldüsen (14a, 14b) bestehen aus drei konzentrischen Rohren, wie dies in Fig. 1f dargestellt ist. Durch das innere, zentrale Rohr wird Brennstoff (15) eingeblasen. Als Brennstoff eignet sich ein gasförmiger Kohlenwasserstoff, beispielsweise CH₄, oder ein Gemisch aus gasförmigen Kohlenwasserstoffen, beispielsweise Erdgas oder eine Mischung aus CH₄, C₂H₆ und C₃H₈, oder aber feinteilige, aschearme Kohle. Es hat sich gezeigt, daß der Schmelzvorgang besonders wirtschaftlich durchgeführt werden kann, wenn zu Beginn gasförmige Kohlenwasserstoffe und danach feinteilige Kohle in die Schmelze eingeblasen werden. Daher werden Sauerstoff und feinteilige, aschearme Kohle vorteilhaft dann eingeblasen, wenn der Schrott durch die von den Brennern (13a, 13b) erzeugte Schmelzwärme soweit aufgeschmolzen ist, daß die Mehrmanteldüsen (14a, 14b) in die Schmelze eintauchen. Die feinteilige, aschearme Kohle hat einen Teilchendurchmesser von 0,01 bis 1,5 mm. Durch das mittlere Rohr der Mehrmanteldüsen (14a, 14b) wird Sauerstoff (16) in die Metallschmelze eingeblasen. Durch das äußere Rohr der Mehrmanteldüse (14) wird ein Kühlmittel (17), vorzugsweise Wasserdampf, in die Metallschmelze eingeblasen; das Kühlmittel verhindert einen vorzeitigen Verschleiß der Mehrmanteldüse und wirkt sich außerdem vorteilhaft auf die in der Schmelze ablaufenden Vergasungs- und Verbrennungsreaktionen aus.

Die in der Schmelze und in der Schrottfüllung gebildeten Gase werden mit vorgewärmter Luft vermischt, welche durch die Blaslanzen (18a, 18b) in die Schrottfüllung (4) eingeblasen wird, die sich im Schmelzgefäß (1) befindet. Die vorgewärmte Luft (19) hat eine Temperatur von 500 bis 600°C und wird in einer Menge von 100 Nm³ pro Tonne abgestochener Schmelze zugesetzt. Mit der vorgewärmten Luft wird der größte Teil des im Metallbad gebildeten CO verbrannt. Das Gemisch aus vorgewärmter Luft, den Verbrennungsabgasen und den Abgasen des Schmelzprozesses wärmt den Schrott vor, der sich oberhalb der Blaslanzen (18a, 18b) befindet. Insgesamt hat die zweite Schrottfüllung (10), die entsprechend dem Schmelzfortschritt in das Schmelzgefäß (1) hineinrutscht, eine durchschnittliche Temperatur von 800 bis 900°C, wobei die Vorwärmung über den Querschnitt des Schrottbehälters (5) sehr gleichmäßig erfolgt. Die Abgase des Schmelzprozesses, die mit den Verbrennungsabgasen und der vorgewärmten Luft vermischt sind, sammeln sich in der Haube (11) und werden über die Abgasleitung (12) abgeführt.

Das Abgas (20) tritt in die Brennkammer (21) ein und wird hier vollständig mit dem noch vorhandenen Sauerstoff verbrannt, welcher der vorgewärmten Luft (19) entstammt; ggf. muß noch Frischluft zugegeben werden. Das aus der Brennkammer (21) über die Leitung (22) austretende Verbrennungsabgas gelangt in den Luftvorwärmer (23), dem über die Leitung (24) kalte Luft zugeführt wird. Die im Luftvorwärmer (23) erzeugte vorgewärmte Luft (19) wird dem Schmelzgefäß (1) über die Blaslanzen (18a, 18b) zugeführt. Das den Luftvorwärmer (23) verlassende Verbrennungsabgas gelangt über die Leitung (25) in den Wärmeaustauscher (26), wo Dampf (27) erzeugt wird. Das abgekühlte Verbrennungsabgas (28) wird nach einer in der Zeichnung nicht dargestellten Reinigung einem Kamin zugeführt und in die Atmosphäre entlassen.

Wenn die erste Schrottfüllung eingeschmolzen ist - wenn sich also die aus der ersten Schrottfüllung gebildete Metallschmelze und der gesamte vorgewärmte Schrott im Schmelzgefäß (1) befinden - werden in einer dritten Verfahrensstufe die Haube (11) sowie der Schrottbehälter (5) durch die in der Zeichnung nicht dargestellte Schwenkvorrichtung vom Schmelzgefäß (1) weggeschwenkt und durch den in Fig. 1d dargestellten Deckel (29) ersetzt. Der Deckel (29) ist mit mindestens einer Elektrode (30), vorzugsweise mit drei Elektroden, ausgerüstet, die senkrecht verfahren werden können. Die Elektrode (30) brennt in den vorgewärmten Schrott und bei Stromfluß wird dieser aufgeschmolzen. Der Deckel (29) ist mit einer Abgasleitung (31) ausgerüstet.

Anschließend wird die Schmelze mittels der Elektrode auf die Abstichtemperatur überhitzt, wobei gleichzeitig über die Mehrmanteldüsen (14a, 14b) Sauerstoff, ein gasförmiger Kohlenwasserstoff oder ein Gemisch aus gasförmigen Kohlenwasserstoffen in die Schmelze eingeblasen werden. Als Kohlenwasserstoffe werden bevorzugt C₂H₆, C₃H₈ und C₄H₁₀ eingesetzt; CH₄ hat sich als nicht geeignet erwiesen. Durch das Einblasen eines oder mehrerer gasförmiger Kohlenwasserstoffe wird das in der Schmelze vorhandene FeO weitgehend reduziert. Anschließend wird die Zufuhr gasförmiger Kohlenwasserstoffe abgestellt, und es wird mit Sauerstoff gefrischt. Der Frischprozeß wird beendet, wenn die im Schmelzgefäß (1) befindliche Schmelze einen Kohlenstoffgehalt < 0,4 Gew.-% hat. Das während des Lichtbogenprozesses - also während des Einschmelzens der zweiten vorgewärmten Schrottfüllung, des leicht reduzierenden Blasens und des Frischens - entstehende Abgas (33) wird der Brennkammer (21) zugeführt, wo es unter Zufuhr von Luft (32) mit dem Ziel der Wärmegewinnung verbrannt wird.

Nachfolgend wird ein Ausführungsbeispiel des erfindungsgemäßen Verfahrens beschrieben:
Schrotteinsatz:

| | |
|---|---|
| erste Schrottfüllung | 38 500 kg |
| stückige Kohle in der ersten Schrottfüllung | 1 500 kg |
| zweite Schrottfüllung | 38 500 kg |

Für das Einschmelzen der ersten und das Vorwärmen der zweiten Schrottfüllung wurden benötigt:

| | |
|---|---|
| Sauerstoff | 4 544 Nm³ |
| Feinkohle | 1 000 kg |
| Erdgas | 650 Nm³ |
| vorgewärmte Luft | 7 000 Nm³ |
| Zeit | 32 Minuten |

Aufgekohlte Schmelze:

| | |
|---|---|
| Kohlenstoffgehalt | 0,4 bis 0,8 % C |
| Temperatur | 1540°C |

Für den Lichtbogenprozeß (Erschmelzen der zweiten vorgewärmten Schrottfüllung, Restreduktion, Frischen, Überhitzen der Schmelze) werden benötigt:

| | |
|---|---|
| Sauerstoff | 1 000 Nm³ |
| C₄H₁₀ | 100 Nm³ |
| Zeit | 25 Minuten |
| elektrische Energie | 12 600 KWh |

Gefrischte Schmelze beim Abstich:

| | |
|---|---|
| Menge | 70 000 kg |
| Kohlenstoffgehalt | 0,1 % C |
| Temperatur | 1 640°C |

Zeit für das Chargieren des Schrotts, das Umsetzen der Prozeßapparate, den Abstich der Stahlschmelze und die Wartung: 12 Minuten

## Patentansprüche

1. Verfahren zur Herstellung von Stahlschmelzen aus Schrott, bei dem
a) in ein Schmelzgefäß, in dem sich ein aus der flüssigen Stahlschmelze bestehender Sumpf befindet, Schrott eingebracht wird, auf das Schmelzgefäß ein Schrottbehälter aufgesetzt wird, der mit Schrott gefüllt ist oder wird und auf den Schrottbehälter eine mit einer Abgasleitung versehene Haube aufgesetzt wird,
b) danach in die im Schmelzgefäß befindliche Schrottfüllung durch mindestens einen Brenner Sauerstoff und gasförmige Kohlenwasserstoffe sowie in die im Schmelzgefäß befindliche Schmelze durch mindestens eine unterhalb der Brenner angeordnete Mehrmanteldüse Sauerstoff sowie feinkörnige Kohle und/oder gasförmige Kohlenwasserstoffe eingeblasen und die im Schmelzgefäß befindliche Schrottfüllung eingeschmolzen wird,
c) wobei gleichzeitig durch oberhalb der Brenner angeordnete Blaslanzen in die im Schmelzgefäß befindliche Schrottfüllung Luft eingeblasen wird, die eine Temperatur von 500 bis 600°C hat und durch die ein großer Teil des vorhandenen CO verbrennt, wodurch die im Schrottbehälter befindliche Schrottfüllung auf eine Temperatur von 800 bis 900°C vorgewärmt wird, die ihrerseits entsprechend dem Schmelzfortschritt in das Schmelzgefäß gelangt,
d) das mit der vorgewärmten Luft sowie dem Verbrennungsabgas vermischte Abgas des Schmelzprozesses über die Abgasleitung abgeführt, noch vorhandenes CO verbrannt und der Wärmeinhalt der Gasmischung ganz oder teilweise zum Aufheizen der über die Blaslanzen in das Schmelzgefäß eingeblasenen Luft verwendet wird,
e) nach Beendigung des Einschmelzens der ersten Schrottfüllung die Haube sowie der Schrottbehälter vom Schmelzgefäß entfernt und durch einen mit mindestens einer Elektrode und einer Abgasleitung versehenen Deckel ersetzt werden,
f) danach in die Schmelze zur Reduktion des FeO durch die Mehrmanteldüsen Sauerstoff und gasförmige Kohlenwasserstoffe eingeblasen sowie gleichzeitig über die Elektroden Energie in die jetzt im Schmelzgefäß befindliche zweite Schrottfüllung und in die Schmelze eingebracht wird,
g) die Schmelze anschließend durch Einblasen von Sauerstoff über die Mehrmanteldüsen bei gleichzeitiger Einbringung von Energie über die Elektroden bis zu einem Kohlenstoffgehalt < 0,4 % gefrischt und danach aus dem Schmelzgefäß schlackenfrei entnommen wird, wobei 10 bis 15 Gew.-% der Schmelze als Sumpf im Schmelzgefäß zurückbleiben.

2. Verfahren nach Anspruch 1, bei dem der Schrott, der gemäß der Verfahrensstufe a) in das Schmelzgefäß eingebracht wird, feste stückige Kohlenstoffträger enthält.

3. Verfahren nach den Ansprüchen 1 bis 2, bei dem als feste stückige Kohlenstoffträger mit Stahlblech ummantelte Kohlebriketts verwendet werden.

4. Verfahren nach den Ansprüchen 1 bis 3, bei dem die gemäß Verfahrensstufe b) verwendeten gasförmigen Kohlenwasserstoffe aus CH₄ und/oder C₂H₆ und/oder C₃H₈ bestehen.

5. Verfahren nach den Ansprüchen 1 bis 4, bei dem die gemäß Verfahrensstufe b) verwendete feinkörnige Kohle einen mittleren Teilchendurchmesser d₅₀ von 0,01 bis 1,5 mm hat.

6. Verfahren nach den Ansprüchen 1 bis 5, bei dem gemäß Verfahrensstufe c) 75 bis 125 Nm³ vorgewärmte Luft pro Tonne abgestochener Schmelze eingesetzt werden.

7. Verfahren nach den Ansprüchen 1 bis 6, bei dem die Schmelze in den Verfahrensstufen b), f) und g) eine Temperatur von 1500 bis 1660°C hat.

8. Verfahren nach den Ansprüchen 1 bis 7, bei dem das in den Verfahrensstufen f) und g) anfallende Abgas über die Abgasleitung des Deckels abgeführt und vollständig verbrannt wird.

9. Verfahren nach den Ansprüchen 1 bis 8, bei dem die in der Verfahrensstufe f) verwendeten gasförmigen Kohlenwasserstoffe aus C₂H₆ und/oder C₃H₈ und/oder C₄H₁₀ bestehen.

10. Vorrichtung zur Durchführung des Verfahrens nach den Ansprüchen 1 bis 9, die aus einem Schmelzgefäß (1), einem Schrottbehälter (5), einer Haube (11), einem Deckel (29), einer Schwenkeinrichtung, einer Gasbrennkammer (21) und einem Luftvorwärmer (23) besteht, wobei das Schmelzgefäß (1) eine Ausmauerung (2), einen Abstich (32), mindestens eine wassergekühlte Mehrmanteldüse (14a, 14b), mindestens einen Brenner (13a, 13b) sowie mindestens eine Blaslanze (18a, 18b) aufweist, wobei die Wände des Schrottbehälters (5) mit Wasser gekühlt sind, wobei die Haube (11) mit einer Abgasleitung (12) versehen ist, wobei der Deckel (29) mindestens eine Elektrode (30) sowie eine Abgasleitung (31) hat und wobei die Schwenkeinrichtung den Schrottbehälter (5), die Haube (11) und den Deckel (29) schwenkend und/oder hebend bewegt.

11. Vorrichtung nach Anspruch 10, bei der der Schrottbehälter (5) einbautenfrei ist.

12. Vorrichtung nach Anspruch 10, bei der der Schrottbehälter (5) mit mindestens zwei klappbaren Halteeinrichtungen (9a, 9b) ausgestattet ist.

13. Vorrichtung nach Anspruch 10, bei der der Schrottbehälter (5) an dem Teil, das auf das Schmelzgefäß (1) aufgesetzt ist, eine Schürze (8) aufweist.
